(19) Europäisches Patentamt
European Patent Office
Office européen des brevets

(11) **EP 2 266 791 B1**

(12) **EUROPEAN PATENT SPECIFICATION**

(45) Date of publication and mention of the grant of the patent:
**12.08.2015 Bulletin 2015/33**

(21) Application number: **09733575.6**

(22) Date of filing: **16.04.2009**

(51) Int Cl.:
*B01D 39/16* (2006.01)    *B01D 39/08* (2006.01)
*B32B 5/26* (2006.01)    *B65D 65/02* (2006.01)
*B65D 65/46* (2006.01)    *B65D 77/00* (2006.01)
*D04H 1/42* (2012.01)

(86) International application number:
**PCT/JP2009/057638**

(87) International publication number:
**WO 2009/128493 (22.10.2009 Gazette 2009/43)**

(54) **FIBROUS SHEET**

FASERSTOFFBAHN

FEUILLE FIBREUSE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **18.04.2008 JP 2008109634**

(43) Date of publication of application:
**29.12.2010 Bulletin 2010/52**

(73) Proprietor: **Ohki Co., Ltd.**
**Okasa-shi**
**Osaka 541-0059 (JP)**

(72) Inventors:
• **MIYAHARA, Fumio**
**Osaka-shi**
**Osaka 541-0059 (JP)**
• **SAITOH, Mitsunori**
**Osaka-shi**
**Osaka 541-0059 (JP)**

• **YAMAGUCHI, Naoko**
**Osaka-shi**
**Osaka 541-0059 (JP)**

(74) Representative: **TBK**
**Bavariaring 4-6**
**80336 München (DE)**

(56) References cited:
**EP-A1- 1 553 224**    **EP-A2- 1 882 765**
**JP-A- 2001 063 757**    **JP-A- 2002 337 936**
**JP-A- 2005 179 578**    **JP-A- 2007 217 833**
**JP-Y2- 2 513 153**

• **"Four state-of-the-art spectrophotometers", Journal of the Society of Dyers and Colourists, vol. 107, no. 7-8, 22 October 2008 (2008-10-22), pages 240-243, XP055115673,**

Remarks:
The file contains technical information submitted after the application was filed and not included in this specification

EP 2 266 791 B1

**Description**

TECHNICAL FIELD

The present invention relates to a fiber sheet that is suitable for a filter material for a tea bag of a black tea, a green tea, or the like.

BACKGROUND ART

A nonwoven fabric filter sheet obtained by laminating a high melting point nonwoven fabric layer and a low melting point nonwoven fabric layer (Patent Document 1), or a nylon gauze obtained by plain-weaving nylon yarns has been conventionally used as a filter material such as for a tea bag of a black tea, a green tea, or the like. The nonwoven fabric filter sheet is cheaper than the nylon gauze, and widely used. However, the nonwoven fabric filter sheet is inferior in terms of its transparency, and has a problem such that it is not easy for a user to see the condition of tea leaves in a tea bag.

The nylon gauze is superior in terms of its transparency, and the material gives a sense of luxuriousness. Therefore, the nylon gauze is suitable for high-quality teas. However, the production rate of the nylon gauze is typically about 0.1 m/min for a width of 1.5 to 2 m. This is significantly slow as compared with that of a nonwoven fabric sheet, which is about 100 to 300 m/min for a width of 1 to 3 m. Thus, the cost will be increased for the slower production rate.

[Prior Art Document]

[Patent Document]

[Patent Document 1] Japanese Utility Model Registration No. 2513153
[Patent Document 2] Japanese Patent Application Laid-Open No. 2000-128233

EP1553224 (A1) discloses a nonwoven fabric characterized in that the nonwoven fabric is a thermoplastic synthetic fiber nonwoven fabric having a fabric weight of 7 to 50 g/m$^2$, an average yarn diameter of 7 to 40 $\mu$m, a partial heat contact bonding ratio of 5 to 30% and a content of a delustering agent of 0.5% by weight or less, or a nonwoven fabric laminate the major component of which is the thermoplastic synthetic fiber nonwoven fabric, and that the nonwoven fabric has a maximum opening diameter of 200 to 2,000 $\mu$m, and shows a transparency of 50% or more, a powder leakage ratio of 10% by weight or less and a hydrophilicity of less than 10 sec, and a tea bag in which the nonwoven fabric is used.

JP2007217833 (A) mentions a conjugate fiber sheet for food liquid extraction comprising at least two layers of fibrous sheets in which one fibrous sheet is (A) a plain weave or a netlike sheet composed of a fiber-forming high-melting polymer having ≥160°C melting point and the other fibrous sheet is (B) a nonwoven fabric composed of a fiber-forming low-melting polymer having a melting point ≥25°C lower than that of (A) the fiber-forming high-melting polymer constituting the plain weave or the netlike sheet and (A) the plain weave or the netlike sheet is integrated with (B) the nonwoven fabric by heating and bonding.

SUMMARY OF THE INVENTION

PROBLEMS TO BE SOLVED BY THE INVENTION

It is an object of the present invention to provide a novel fabric sheet that has an excellent transparency and gives a sense of luxuriousness as with the nylon gauze, and that achieves a high productivity as with the nonwoven fabric filter sheet.

MEANS FOR SOLVING THE PROBLEMS

The inventors of the present invention have found that if a particular nonwoven fabric is laminated on a gauze whose fiber density is substantially lowered to a specified range, it is possible to obtain a fiber sheet having the texture of a gauze, and having a superior transparency and a superior rupture strength as compared with the conventional nonwoven fabric filter sheet. The inventors of the present invention have also found that the fiber sheet can achieve a significantly higher productivity as compared with the conventional gauze.

That is, the present invention provides a fiber sheet according to claim 1. Further beneficial embodiments are defined in the dependent claims. The fiber sheet has a gauze and a nonwoven fabric laminated on the gauze, wherein the gauze has a warp fineness of 50/9 to 400/9 dtex (5 to 40 deniers), a warp density of 40 to 100 warps/ 2.54 cm (40 to 100 warps/inch), a weft fineness of 50/9 to 400/9 dtex (5 to 40 deniers), and a weft density of 20 to 100 wefts/ 2.54 cm (20 to 100 wefts/inch); the nonwoven fabric is made of a melt-blown nonwoven fabric or a spunbonded nonwoven fabric, having a fineness of 40/9 dtex (4.0 deniers) or less; and the fiber sheet has a basis weight of 7.5 to 20 g/m$^2$. The present invention also provides a filter material for a tea bag made of this fiber sheet.

EFFECTS OF THE INVENTION

The fiber sheet of the present invention gives a sense of luxuriousness by the texture of a gauze formed by warps and wefts.

The fiber sheet of the present invention also has a transparency higher than that of the nonwoven fabric filter sheet. Therefore, with a tea bag made with this fiber sheet, it becomes possible to easily observe the unfolding of tea leaves in the tea bag.

Moreover, the fiber sheet of the present invention has a superior rupture strength as compared with the conventional nonwoven fabric filter sheet, and can have an increased production rate as compared with the conventional nylon gauze. The fiber sheet of the present invention is excellent also in terms of its heat sealing property and its ultrasonic sealing property. Therefore, according to the fiber sheet of the present invention, the productivity of tea bags can be improved.

EMBODIMENTS FOR CARRYING OUT THE INVENTION

Hereinafter, the present invention will be described in detail.

The fiber sheet of the present invention is obtained by laminating a nonwoven fabric on a gauze. Herein, the gauze having a warp fineness of 50/9 to 400/9 dtex (5 to 40 deniers), a warp density of 40 to 100 warps/ inch), a weft fineness of 50/9 to 400/9 dtex (5 to 40 deniers), and a weft density of 20 to 100 wefts/ 2.54 cm (20 to 100 wefts/ inch) is used in order to provide the fiber sheet of the present invention with a sheet strength and a desirable transparency that are necessary for a filter sheet material for tea bags.

If the warp fineness or the weft fineness is too thin, the gauze cannot be woven, and there cannot be obtained a rupture strength necessary for the bag-making of tea bags. In order to improve the rupture strength of the gauze, the warp density or the weft density thereof may be increased. If these densities are increased, however, the transparency and productivity of the gauze are lowered. In contrast, if the warp fineness or the weft fineness is too thick, there is an increase in the weight of fibers to be used for a sheet having the same warp density or weft density, thereby going against the request for a reduction in the material used. In the present invention, on the other hand, the warp fineness and the weft fineness are set to 50/9 to 400/9 dtex (6 to 40 deniers), and preferably set to 150/9 to 300/9 dtex (15 to 30 deniers), thereby providing the fiber sheet of the present invention with a transparency and a rupture strength necessary for the bag-making of tea bags.

If the yarn density of a gauze is too low, the weave pattern of the gauze is misaligned. Thus, when tea bags are produced from the fiber sheet, the powder leakage is more likely to occur. In order to eliminate the powder leakage, one may consider to laminate the nonwoven fabric on the gauze so as to have a large thickness. If the nonwoven fabric is laminated to have a large thickness, however, the transparency thereof is decreased. In contrast, if the yarn density is increased, it takes time to weave the gauze, thereby increasing the production cost. In particular, since the weft density and the rate of the gauze weaving are inversely related to each other, the weft density is preferably set to be low as long as the misalignment of the weave pattern, or the like, does not become a problem. In the present invention, on the other hand, the warp density is set to 40 to 100 warps/ 2.54 cm (40 to 100 warps/ inch) and the weft density is set to 20 to 100 wefts/ 2.54 cm (20 to 100 wefts/ inch), and preferably the warp density is set to 40o 70 warps/ 2.54 cm (40 to 70 warps/ inch) and the weft density is set to 30 to 60 wefts/ 2. 54 cm (30 to 60 wefts/ inch). In this way, it is possible to eliminate the powder leakage in the tea bags produced from this fiber sheet, and it is possible to substantially improve the transparency and productivity thereof as compared with the case in the conventional technique. More specifically, the production rate of the gauze having a width of 100 to 200 mm can be increased to 0.1 to 0.5 m/min, which is higher than that of the conventional gauze extraction sheet.

The warp density is preferably equal to the weft density in view of the mechanical suitability of the fiber sheet with respect to the bag making and filling machine for producing tea bags from the fiber sheet. However, since the weft density substantially influences the production rate of the gauze, the weft density may be set to be lower than the warp density as long as the mechanical suitability with respect to the bag making and filling machine is not impaired.

A filament fiber used for a general textile may be used for the constituent fiber of the weaving yarn of the gauze. Preferable examples of such a filament fiber include polyester such as polyethylene terephthalate, polyolefin such as polypropylene and polyethylene, polylactic acid, or aliphatic polyester or aromatic polyester biodegradable fiber, from the viewpoints that a change in color is less likely to occur, that an unnecessary eluted substance is not produced, that the heat sealability thereof is excellent when being made into tea bags, and that it is easy to heat-fix fibers with each other so that the weave pattern thereof is not misaligned.

Moreover, in view of the disposal after use, the biodegradable fiber is preferable. Among others, the aromatic polyester biodegradable fiber is more preferable due to its excellent processability, heat-resisting property, durability, and the like, under the normal use condition, and due to such a characteristic that it is quickly biodegraded by microorganisms after the disposal. For example, the aromatic polyester biodegradable fiber may be an aromatic polyester copolymer having a repeating unit comprising terephthalic acid, sulfonic acid metallic salt, aliphatic dicarboxylic acid, ethylene glycol, and diethylene glycol. In the acid component, terephthalic acid is contained in an amount of about 50 mol% to about 90 mol%, sulfonic acid metallic salt is contained in an amount of about 0.2 mol% to about 6 mol%, and aliphatic dicarboxylic acid is contained in an amount of about 4 mol% to about 49.8 mol%. In the glycol component, ethylene glycol is contained in an amount of about 50 mol% to about 99.9 mol%, and diethylene glycol is contained in an amount of about 0.1 mol% to about 50 mol%. Specifically, examples of the aromatic polyester biodegradable fiber include Apexa (registered trademark) available from DuPont Co., Ltd.

The weaving yarn of the gauze may be a monofilament, a multifilament obtained by twisting a plurality of filaments, a fiber bundle obtained by bundling a plurality of filaments without twisting, a core-in-sheath type composite yarn made of a high melting point core portion and a low melting point sheath portion, or the like. With the use of the core-in-sheath type composite yarn, fibers can be strongly fixed with one another. Therefore, when the fiber sheet is subjected to a bag making and filling machine, it is possible to prevent the meandering of the sheet. Moreover, by using, as a weft, a fiber bundle obtained by bundling a plurality of filaments without twisting, it is possible to shorten the time required for the weaving.

When the core-in-sheath type composite yarn is used, it is preferable to set the difference between the melting point of the core portion and that of the sheath portion to be 20°C or more. For example, high melting point polylactic acid with a melting point of 200 to 250°C may be used for the core portion, and low melting point polylactic acid with a melting point of 160 to 180°C may be used for the sheath portion. Alternatively, polyethylene terephthalate with a melting point of 250 to 270°C may be used for the core portion, and low melting point polyester with a melting point of 180 to 220°C may be used for the sheath portion. Alternatively, polypropylene with a melting point of 160 to 170°C may be used for the core portion, and an ethylene-propylene copolymer with a melting point of 135 to 145°C or polyethylene with a melting point of 120 to 140°C may be used for the sheath portion. In this way, fibers can be fixed to one another with heat. Note that the fixing between fibers can be performed by the blowing of hot air after the weaving is finished, or can be performed by hot air used when laminating a melt-blown nonwoven fabric as a nonwoven fabric.

The nonwoven fabric to be laminated with the gauze is a melt-blown nonwoven fabric or spunbonded nonwoven fabric having a fineness of 40/9 dtex (4.0 deniers) or less. In that range, the fineness of the nonwoven fabric is preferably 30/9 dtex (3.0 deniers) or less, and more preferably 20/9 dtex (2.0 deniers) or less in view of maintaining its transparency and preventing the powder leakage. The type of the nonwoven fabric is a melt-blown nonwoven fabric or a spunbonded nonwoven fabric since the formation of the nonwoven fabric and the lamination with the gauze can be simultaneously performed by discharging the constituent fiber of the nonwoven fabric directly on the gauze.

In the case where the fineness of the constituent fiber of the nonwoven fabric is over 40/9 dtex (4.0 deniers), if the thickness of the nonwoven fabric to be laminated with the above-described gauze is set to be a thickness such that a transparency in the fiber sheet can be maintained, it becomes difficult to prevent the powder leakage in the fiber sheet. However, if the fineness of the constituent fiber of the nonwoven fabric is set to 40/9 dtex (4.0 deniers) or less, it is possible to form the nonwoven fabric with a thickness capable of maintaining a transparency in the fiber sheet, and it is also possible to prevent the powder leakage in the fiber sheet. The balance between the maintaining of a transparency and the prevention of the powder leakage in the fiber sheet becomes more preferable if the fineness of the constituent fiber of the nonwoven fabric is set to 30/9 dtex (3.0 deniers) or less, and furhter preferable if the fineness of the constituent fiber of the nonwoven fabric is set to 20/9 dtex (2.0 deniers) or less. Note that there is no specific lower limit for the fineness of the constituent fiber of the nonwoven fabric, and a nonwoven fabric with a fineness of 1/9 dtex (0.1 denier) or more is easily obtainable.

On the surface of the fiber sheet of the present invention in which the gauze and the nonwoven fabric are laminated on each other, the constituent fibers of the gauze only exist on the portions of the weave pattern. On the other hand, the constituent fibers of the nonwoven fabric exist evenly over the entire laminated surface. Therefore, in order to obtain a uniform sealing strength, it is preferable that the nonwoven fabric have the heat sealing property of the fiber sheet. When the fiber sheet is made into bags by means of heat sealing, it is necessary to make the outer layer of the overlapped portions of the sheet be a high melting point layer and make the inner layer thereof be a low melting point layer. Thus, the melting point of the constituent fiber of the nonwoven fabric is preferably lower than the melting point of the constituent fiber of the gauze so that a melting point difference therebetween is 40°C or more.

As means for providing a melting point difference between the constituent fiber of the gauze and the constituent fiber of the nonwoven fabric, fiber materials having different melting points may be used. Alternatively, a drawn fiber may be used as the constituent fiber of the gauze, and an undrawn fiber may be used as the constituent fiber of the nonwoven fabric so as to have a melting point difference due to a difference in the crystalline properties of the fibers.

While the kind of the constituent fiber of the nonwoven fabric to be used is one of the above-described fibers listed as examples for the constituent fiber of the weaving yarn of the gauze, it is preferred to use one having an affinity with the gauze.

Examples of preferred combinations between the constituent fiber of the gauze and the constituent fiber of the nonwoven fabric include: a combination in which the gauze is polyethylene terephthalate, and the nonwoven fabric is low melting point polyester; a combination in which the gauze is polypropylene, and the nonwoven fabric is an ethylene-polypropylene copolymer or polyethylene; a combination an embodiment in which the gauze is polylactic acid, and the nonwoven fabric is a polylactic acid or succinic acid biodegradable resin; and a combination in which the gauze is aromatic polyester biodegradable fiber (drawn), and the nonwoven fabric is aromatic polyester biodegradable fiber (undrawn or partially-drawn).

The basis weight of the nonwoven fabric is preferably 0.5 g/m² or more in view of the prevention of the powder leakage in tea bags produced from the fiber sheet. The basis weight of the nonwoven fabric is preferably 5 g/m² or less in view of its transparency. In view of both the aspects, the basis weight of the nonwoven fabric is more preferably 1 to 3 g/m².

The basis weight of the fiber sheet of the present invention in which the nonwoven fabric is laminated on the gauze is 7.5 to 20 g/m² in view of its productivity, the prevention of the powder leakage, and its transparency.

Thus, in the case where powdered tea leaves are filled in the tea bags produced from this fiber sheet, no powder leakage occurs, and it is possible to visually check the condition of the tea leaves in the tea bags.

Since the production rate of the gauze is lower than the production rate of the nonwoven fabric, the preferable laminating method between the gauze and the nonwoven fabric is such that the gauze is first produced, and then the gauze and the nonwoven fabric are laminated on each other. More specifically, melted fibrous resin is sprayed on the previously-produced gauze so that the gauze and the nonwoven fabric are laminated on each other, and the lamination is fixed while being left as it is. Alternatively, in order to enhance the adhesive strength between the gauze and the nonwoven fabric, after the gauze and the nonwoven fabric are laminated on each other, embossing or calendering is performed thereto. In the case where the gauze and the nonwoven fabric are laminated on each other and the lamination is then fixed while being left as it is, after the bag-making of tea bags is performed and contents such as tea leaves are filled therein, the contents may be attached to fluffs of fibers on the surface of the nonwoven fabric, thereby spoiling the aesthetic appearance of the tea bags. If calendering is performed, however, the fibers on the surface of the nonwoven fabric are bonded to each other, and it is thus possible to suppress the fluffing. Therefore, calendering is preferred in terms of the aesthetic appearance of the tea bags.

The processing temperature of the calendering is suitably set in accordance with the constituent fiber of the nonwoven fabric. For example, in the case of low melting point polyethylene terephthalate, the drawing thereof or the making of low melting point polyethylene terephthalate into fibers is performed at a temperature of about 300°C. Embossing or calendering for fixing the fibers on the gauze after the lamination is performed at a temperature of about 140 to 200°C.

In this way, the fiber sheet of the present invention can be produced at a production rate that is 2 to 10 times as that of the nylon gauze used as the conventional filter sheet for tea bags.

The fiber sheet of the present invention satisfies that a rupture strength measured in accordance with the measuring method of a tensile strength and a degree of elongation in the general filament-fiber nonwoven fabric testing method of JIS L1906 is 30 to 300 N/50 mm lengthwise and 20 to 300 N/50 mm widthwise, and preferably 100 to 300 N/50 mm lengthwise and 50 to 300 N/50 mm widthwise. The fiber sheet of the present invention also satisfies that a transparency Lt calculated by the following expression is 60% or more, and preferably 70% or more.

$$Lt = Lw - Lb$$

In this expression, Lb is a reflectance of white light when a black plate is placed on the back of the fiber sheet (%), and Lw is a reflectance of white light when a standard white plate is placed on the back of the fiber sheet (%). Thus, the fiber sheet of the present invention has both of a rupture strength required for the filter sheet for tea bags and a desirable transparency for the filter sheet for tea bags. Therefore, when the fiber sheet of the present invention is subjected to the bag making and filling machine, or when a tag being temporarily stuck on the surface of the fiber sheet is peeled off, no rupture occurs, and it is also easy to visually check the contents of the tea bags.

The fiber sheet of the present invention also has uniform pores on the surface thereof each having a pore diameter of 50 to 300 μm, and preferably a pore diameter of 100 to 200 μm. Thus, the permeability thereof is favorable, but the powder leakage of tea leaves, or the like, is not occurred. Therefore, the fiber sheet of the present invention is preferable for an extracting filter for teas, or the like.

EXAMPLES

Example 1

(1) Production of fiber sheet

A fiber sheet in which a nonwoven fabric is laminated on a gauze was produced with the following specifications.

Gauze

• Fiber material: core-in-sheath structure core portion: polyethylene terephthalate 50% sheath portion: polyethylene terephthalate copolymerized with isophthalic acid 50%
• Fiber density: 1.38
• Fineness: 250/9 dtex (25 deniers)
• Warp density: 50 warps/ 2.54 cm (50 warps/ inch), Weft density: 50 wefts/ 2.54 cm (50 wefts/ inch)

Nonwoven fabric

- Fiber material: polyethylene terephthalate
- Type: melt-blown nonwoven fabric
- **Fineness: 8/9 dtex (0.8 denier)**
- Basis weight: 2 g/m$^2$

(2) Evaluation

The basis weight of the resultant fiber sheet was 13 g/m$^2$. The fiber sheet had a luxurious texture of a gauze formed by warps and wefts.

Next, (a) the rupture strength, (b) the transparency, and (c) the pore size distribution of this fiber sheet were measured as follows.

(a) Rupture strength

The rupture strength was measured in accordance with the measuring method of a tensile strength and a degree of elongation in the general filament-fiber nonwoven fabric testing method of JIS L1906. The result was 80 N/50 mm lengthwise and 80 N/50 mm widthwise.

(b) Transparency

The reflectance in the case where a black plate is placed on the back of the fiber sheet and the reflectance in the case where a standard white plate is placed on the back of the fiber sheet were measured using a Macbeth spectrophotometer (CE-3000, manufactured by Sakata Inx Corporation), and the transparency Lt was obtained by the following expression.

$$Lt = Lw - Lb$$

In this expression, Lb is a reflectance of white light when a black plate is placed on the back of the fiber sheet (%); and Lw is a reflectance of white light when a standard white plate is placed on the back of the fiber sheet (%).
As a result, the transparency was 82%.

(c) Pore size distribution

The pore size distribution was measured in accordance with the bubble point method (JIS K 3832) using a pore size distribution measuring instrument. As a result, the pore size distribution was in the range of 140 to 200 $\mu$m.

Example 2

(1) Production of fiber sheet

A fiber sheet in which a nonwoven fabric is laminated on a gauze was produced with the following specifications.

Gauze

- Fiber material: polylactic acid monofilament
- Fiber density: 1.24
- Fineness:250/9 dtex (25 deniers)
- Warp density:50 warps/ 2.54 cm (50 warps/ inch), Weft density: 45 wefts/ 2.54 cm (wefts/ inch

Nonwoven fabric

- Fiber material: polylactic acid
- Type: melt-blown nonwoven fabric
- Fineness: 6/9 dtex (0.6 denier)
- Basis weight: 2 g/m$^2$

(2) Evaluation

The basis weight of the resultant fiber sheet was 12 g/m$^2$. The fiber sheet had a luxurious texture of a gauze formed by warps and wefts.
As with Example 1, (a) the rupture strength, (b) the transparency, and (c) the pore size distribution of this fiber sheet were measured. The results were as follows.
(a) Rupture strength: 65 N/50 mm lengthwise and 60 N/50 mm widthwise
(b) Transparency: 85%
(c) Pore size distribution: 180 to 220 $\mu$m

Example 3

(1) Production of fiber sheet
A fiber sheet in which a nonwoven fabric is laminated on a gauze was produced with the following specifications.

Gauze

- Fiber material: aromatic polyester biodegradable fiber (drawn fiber)(Apexa manufactured by DuPont Co., Ltd.)
- Fiber specific gravity: 1.38
- Fineness: 300/9 dtex (30 deniers)
- Warp density:45 warps/ 2.54 cm (45 warps/ inch), Weft density: 45 wefts/ 2.54 cm (45 wefts/ inch)

Nonwoven fabric

- Fiber material: aromatic polyester biodegradable fiber (undrawn fiber)(Apexa manufactured by DuPont Co., Ltd.)

- Type: spunbonded nonwoven fabric
- Fineness: 30/9 dtex (3.0 deniers)
- Basis weight: 3 g/m$^2$

(2) Evaluation

The basis weight of the resultant fiber sheet was 15 g/m$^2$. The fiber sheet had a luxurious texture of a gauze formed by warps and wefts.

As with Example 1, (a) the rupture strength, (b) the transparency, and (c) the pore size distribution of this fiber sheet were measured. The results were as follows.

(a) Rupture strength: 70 N/50 mm lengthwise and 70 N/50 mm widthwise
(b) Transparency: 79%
(c) Pore size distribution: 160 to 250 $\mu$m

Comparative Example 1

In the same manner as that of Example 1, (a) the rupture strength, (b) the transparency, and (c) the pore size distribution of a spunbonded nonwoven fabric made of polyethylene terephthalate (the basis weight thereof was 12 g/m$^2$ and the fineness thereof was 20/9 dtex (2 deniers)) were measured. The following results were obtained.

(a) Rupture strength: 30 N/50 mm lengthwise and 13 N/50 mm widthwise
(b) Transparency: 57%
(c) Pore size distribution: 100 to 450 $\mu$m

Comparative Example 2

In the same manner as that of Example 1, (a) the rupture strength, (b) the transparency, and (c) the pore size distribution of a dry type thermal bonded nonwoven fabric made of polypropylene and polyethylene core-in-sheath composite fiber (the basis weight thereof was 12 g/m$^2$ and the fineness thereof was 20/9 dtex (2 deniers)) were measured. The following results were obtained.

(a) Rupture strength: 50 N/15 mm lengthwise and 18 N/15 mm widthwise
(b) Transparency: 52%
(c) Pore size distribution: 250 to 600 $\mu$m

From Examples 1, 2, and 3, and Comparative Examples 1 and 2 described above, it can be seen that according to the fiber sheet of the present invention including a gauze and a nonwoven fabric laminated on each other, it is possible, when the fiber sheet of the present invention has the same basis weight as that of the sheet made exclusively of a nonwoven fabric, to improve its rupture strength and its transparency and to have uniform pore diameters as compared with the sheet made exclusively of a nonwoven fabric.

INDUSTRIAL APPLICABILITY

The fiber sheet of the present invention has a strength sufficient for being subjected to a bag making and filling machine. The fiber sheet of the present invention can be subjected to any known low-speed or highspeed heat sealing type bag making and filling machine or ultrasonic type bag making and filling machine. Thus, it is possible to produce bags having various shapes such as a rectangular shape and a pyramid shape. Moreover, since the fiber sheet of the present invention has a fine weave pattern, powdered tea leaves can be filled into tea bags produced from this fiber sheet. Furthermore, since the fiber sheet of the present invention has a higher transparency, it is possible to see the inside of the tea bags. Therefore, the fiber sheet of the present invention is especially useful as a filter for a tea bag of a green tea, a black tea, or the like. The fiber sheet of the present invention is also useful as a filter material for soup stock, coffee, bath additives, or the like.

**Claims**

1. A fiber sheet comprising a gauze and a nonwoven fabric laminated on the gauze, wherein:

    the gauze has a warp fineness of 50/9 to 400/9 dtex (5 to 40 deniers), a warp density of 40 to 100 warps/2.54 cm (40 to 100 warps/inch), a weft fineness of 50/9 to 400/9 dtex (5 to 40 deniers), and a weft density of 20 to 100 wefts/2.54 cm (20 to 100 wefts/inch);
    the nonwoven fabric is made of a melt-blown nonwoven fabric or a spunbonded nonwoven fabric, having a fineness of 40/9 dtex (4.0 deniers) or less; and
    the fiber sheet has a basis weight of 7.5 to 20 g/m$^2$.

2. The fiber sheet according to claim 1, wherein:

    the nonwoven fabric has a basis weight of 5 g/m$^2$ or less; and the fiber sheet has a basis weight of 7.5 to 20 g/m$^2$.

3. The fiber sheet according to claim 1 or 2, wherein the nonwoven fabric and the gauze each have constituent fiber, and
    the constituent fiber of the nonwoven fabric has a lower melting point than that of the constituent fiber of the gauze.

4. The fiber sheet according to any of claims 1 to 3, wherein:

the gauze is made of polylactic acid, or aliphatic or aromatic polyester biodegradable fiber; and the nonwoven fabric is made of polylactic acid, succinic acid biodegradable resin, or aromatic polyester biodegradable fiber.

5. The fiber sheet according to any of claims 1 to 4, wherein:

the gauze is made of a core-in-sheath type composite yarn formed from a core portion and a sheath portion each made of polylactic acid; and the polylactic acid of the core portion has a melting point higher than that of the polylactic acid of the sheath portion by 20°C or more.

6. The fiber sheet according to any of claims 1 to 5, wherein the nonwoven fabric is a melt-blown nonwoven fabric.

7. A filter material for a tea bag, comprising the fiber sheet according to any of claims 1 to 6.

**Patentansprüche**

1. Faserbahn, das eine Gaze und ein auf der Gaze laminiertes Faservlies umfasst, wobei:

die Gaze eine Ketten-Feinheit von 50/9 bis 400/9 dtex (5 bis 40 Deniers), eine Ketten-Dichte von 40 bis 100 Ketten/2,54 cm (40 bis 100 Ketten/Zoll), eine Schuß-Feinheit von 50/9 bis 400/9 dtex (5 bis 40 Deniers) und eine Schuß-Dichte von 20 bis 100 Schüsse pro 2,54 cm (20 bis 100 Schüsse/Zoll) aufweist; das Faservlies aus einem schmelz-geblasenen Faservlies oder einem Spinnfaservlies, mit einer Feinheit von 40/9 dtex (4,0 Deniers) oder weniger, hergestellt ist; und die Faserbahn ein Basisgewicht von 7,5 bis 20 g/m$^2$ aufweist.

2. Faserbahn nach Anspruch 1, wobei:

das Faservlies ein Basisgewicht von 5 g/m$^2$ oder weniger aufweist; und die Faserbahn ein Basisgewicht von 7,5 bis 20 g/m$^2$ aufweist.

3. Faserbahn nach Anspruch 1 oder 2, wobei das Faservlies und die Gaze jeweils eine konstituierende Faser aufweisen, und die konstituierende Faser des Faservlieses einen niedrigeren Schmelzpunkt als die der konstituierenden Faser der Gaze aufweist.

4. Faserbahn nach einem der Ansprüche 1 bis 3, wobei:

die Gaze aus Polymilchsäure oder aus biologisch-abbaubarer Faser aus aliphatischem oder aromatischem Polyester hergestellt ist; und das Faservlies aus Polymilchsäure, biologisch-abbaubarem Bernsteinsäureharz oder biologisch-abbaubarer Faser aus aromatischem Polyester hergestellt ist.

5. Faserbahn nach einem der Ansprüche 1 bis 4, wobei:

die Gaze aus einem Kompositgarn vom Kern-in-Mantel Typ hergestellt ist, das aus einem Kernabschnitt und einem Mantelabschnitt, die jeweils aus Polymilchsäure hergestellt sind, gebildet ist; und die Polymilchsäure des Kernabschnitts einen Schmelzpunkt aufweist, der um 20°C oder mehr größer ist als der der Polymilchsäure des Mantelabschnitts.

6. Faserbahn nach einem der Ansprüche 1 bis 5, wobei das Faservlies ein schmelz-geblasenes Faservlies ist.

7. Filtermaterial für einen Teebeutel, das die Faserbahn nach einem der Ansprüche 1 bis 6 umfasst.

**Revendications**

1. Feuille fibreuse comprenant une gaze et un tissu non tissé stratifié sur la gaze, où :

la gaze a une finesse de chaîne allant de 50/9 à 400/9 dtex (5 à 40 deniers), une densité de chaîne allant de 40 à 100 chaînes/2,54 cm (40 à 100 chaînes/pouce), une finesse de trame allant de 50/9 à 400/9 dtex (5 à 40 deniers), et une densité de trame allant de 20 à 100 trames/2,54 cm (20 à 100 trames/pouce) ; le tissu non tissé est réalisé en un tissu non-tissé obtenu par fusion-soufflage ou en un tissu non-tissé filélié, ayant une finesse inférieure ou égale à 40/9 dtex (4,0 deniers) ; et la feuille fibreuse a une masse surfacique allant de 7,5 à 20 g/m$^2$.

2. Feuille fibreuse selon la revendication 1, dans laquelle :

le tissu non tissé a une masse surfacique inférieure ou égale à 5 g/m$^2$ ; et la feuille fibreuse a une masse surfacique allant de 7,5 à 20 g/m$^2$.

3. Feuille fibreuse selon la revendication 1 ou 2, dans laquelle chacun(e) du tissu non tissé et de la gaze a une fibre constituante, et

la fibre constituante du tissu non tissé a un point de fusion inférieur à celui de la fibre constituante de la gaze.

4. Feuille fibreuse selon l'une des revendications 1 à 3, dans laquelle :

la gaze est réalisée en acide polylactique, ou en une fibre biodégradable de polyester aliphatique ou aromatique ; et
le tissu non tissé est réalisé en acide polylactique, en une résine biodégradable d'acide succinique, ou en une fibre biodégradable de polyester aromatique.

5. Feuille fibreuse selon l'une des revendications 1 à 4, dans laquelle :

la gaze est réalisée en un fil composite de type âme en gaine formé à partir d'une partie âme et d'une partie gaine réalisées chacune en acide polylactique ; et
l'acide polylactique de la partie âme a un point de fusion supérieur à celui de l'acide polylactique de la partie gaine de 20°C ou plus.

6. Feuille fibreuse selon l'une des revendications 1 à 5, dans laquelle le tissu non tissé est un tissu non tissé obtenu par fusion-soufflage.

7. Matériau de filtre pour un sachet de thé, comprenant la feuille fibreuse selon l'une des revendications 1 à 6.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2513153 B
- JP 2000128233 A
- EP 1553224 A1
- JP 2007217833 A